Europäisches Patentamt

European Patent Office

Office européen des brevets

(11) Numéro de publication : **0 506 546 A2**

# (12) DEMANDE DE BREVET EUROPEEN

(21) Numéro de dépôt : **92400795.8**

(22) Date de dépôt : **24.03.92**

(51) Int. Cl.⁵ : **G02B 6/16,** G02B 6/34

(30) Priorité : **29.03.91 FR 9103902**

(43) Date de publication de la demande :
**30.09.92 Bulletin 92/40**

(84) Etats contractants désignés :
**AT BE CH DE DK ES FR GB GR IT LI LU MC NL
PT SE**

(71) Demandeur : **GAZ DE FRANCE
23, rue Philibert Delorme
F-75017 Paris (FR)**

(72) Inventeur : **Di Bin, Philippe
65, avenue de Montjouis
F-87100 Limoges (FR)**
Inventeur : **Facq, Paul
73, rue des Fougères
F-87350 Panazol (FR)**
Inventeur : **Zongo, Paul-Hubert
7, bis rue du Petit Limoges
F-87270 Couzeix (FR)**

(74) Mandataire : **Lerner, François et al
5, rue Jules Lefèbvre
F-75009 Paris (FR)**

(54) **Fibre optique à réseau de Bragg et ses applications.**

(57)   L'invention concerne une fibre optique (1) comportant sur une partie de sa longueur des variations d'indice de réfraction disposées en strates (5) planes, parallèles et périodiques, de période 1, inclinées d'un angle a par rapport à l'axe (4) de la fibre. La normale aux strates fait un angle non nul avec l'axe (4) de la fibre (1).
   Elle concerne également l'application de cette fibre optique comme extracteur sélectif de flux, injecteur de lumière, coupleur, capteur et polariseur.

FIG.1

EP 0 506 546 A2

Jouve, 18, rue Saint-Denis, 75001 PARIS

L'invention concerne un dispositif optique comprenant au moins une fibre optique à réseau de Bragg et ses applications en tant qu'extracteur sélectif de flux, injecteur de lumière, coupleur à fibre optique, capteur à fibre optique, et polariseur à fibre optique.

Pour éviter toute ambiguïté, il est précisé que sous le terme "fibre optique" est inclus tout composant optique conducteur de lumière en forme de filament comprenant une partie formant guide d'onde appelée "coeur", entourée au moins partiellement par une gaine, le coeur pouvant s'étendre coaxialement à la gaine ou être décalé ou désaxé, et les sections de ce coeur et de cette gaine pouvant indépendamment être tant circulaires que parallélépipédiques, ou autres (par exemple en cercle tronqué, comme au brevet US-A-4 867 522).

Dans ce qui suit on fera toutefois essentiellement référence, par souci de clarté, aux fibres optiques sensiblement cylindriques à coeur et gaine de section circulaires, s'étendant concentriquement, dans l'axe de la fibre considérée.

Le développement des fibres optiques et de leurs applications ont suscité la mise au point de composants à base de fibres remplissant les mêmes fonctions ou au moins des fonctions analogues à celles usuellement remplies par les composants optiques traditionnels.

D'autres composants à fibre optique sont plus spécifiques et il est difficile de trouver leurs correspondants en optique traditionnelle.

C'est ainsi qu'ont été développées des fibres optiques à réseau de Bragg.

De telles fibres sont notamment décrites dans les brevets américains US-A-4 725 110, US-A-4 806 012 et US-A-4 807 950.

Selon la technique décrite dans ces documents, une fibre, en verre ou en silice dopée au germanium est traitée de manière à constituer à l'intérieur de celle-ci un réseau de Bragg permanent, ou définitivement changé.

Ce réseau est constitué de strates planes et parallèles d'indice constant. L'indice varie d'une strate à l'autre et ses variations sont périodiques, de période I, les strates n'étant donc ici pas éphémères, ne disparaissant ainsi pas lorsque la fibre n'est plus éclairée.

Il est montré, dans ces documents, que le flux lumineux réfléchi par un tel réseau de Bragg a des caractéristiques fonctions de sa période.

La période est déterminée par les conditions de fabrication du réseau de Bragg.

Pour être permanent ou définitif, ce réseau de Bragg est réalisé en soumettant une fibre optique ou réseau d'interférences produit par l'intersection de deux faisceaux ultraviolets provenant en l'espèce d'une même source, l'intensité élevée des ondes lumineuses appliquées et leurs conditions d'applications (longueur d'onde, angles de propagation) permettant d'obtenir un coeur de fibre présentant un indice de réfraction définitivement changé en y imprimant ou en y gravant (au moins) un réseau de Bragg en strates, des perturbations périodiques quasiment irréversibles de l'indice de réfraction étant alors formées dans le matériau constituant le coeur de cette fibre.

Les différentes strates de la fibre sont soumises à des éclairements variables qui entraînent des modifications variables d'indice. La répartition de l'intensité dans les franges d'interférences étant sinusoïdale, de période I, elles produisent des variations d'indice de même période dans la fibre.

La période du réseau de Bragg est donc déterminée par les conditions de production de l'interférence (angle, longueur d'onde des faisceaux...)

Il est souligné, dans ces documents de l'art antérieur, que les fibres en question à strates permanentes sont particulièrement destinées à être utilisées comme jauge de contrainte.

L'objectif de la présente invention est la conception d'un nouveau composant optique, simple et susceptible d'applications très variées.

Selon l'invention, la normale aux strates de la fibre considérée fera un angle non nul avec l'axe de la fibre, à la différence donc des strates des fibres de l'art antérieur présenté ci-avant dont la normale est parallèle à l'axe de ces fibres.

De préférence, les strates de la fibre de l'invention seront en fait inclinées par rapport à l'axe de la fibre. Et selon un mode de réalisation préféré, ladite fibre sera monomode. Elle pourrait toutefois être multimode. En outre, la (chaque) fibre comprendra de préférence des strates permanentes, définitivement imprimées. Mais ces strates pourraient également, en variante, être temporaires ou éphémères. Dans ce cas, les strates apparaîtraient tant que la fibre serait éclairée par un flux optique et disparaîtraient en l'absence de flux. Des dispositifs optiques avec une fibre à strates temporaires sont d'ailleurs décrits dans la publication EP-A-0 254 509 et dans la demande FR-91 03592. On s'y référera pour toute question concernant la réalisation de réseaux temporaires.

Quant auxdites variations de l'indice de réfraction, elles seront de préférence sinusoïdales dans la direction de l'axe de la fibre.

Par ailleurs, selon une autre caractéristique importante de l'invention, le dispositif optique comprendra avantageusement un système optique avec une surface intérieure réfléchissante, de préférence concave ou à action convergente, propre à entourer au moins partiellement ladite fibre en particulier là où elle comporte ses dites strates, pour être en mesure de réfléchir une partie au moins d'un flux lumineux circulant dans cette fibre et qui en a été extrait par l'intermédiaire desdites strates. En pratique, ce système optique sera de préférence cylindrique, la (les) fibre(s) étant alors avantageusement dans la partie de leur longueur où elle(s) comporte(nt) lesdites variations d'indice, située(s) à un foyer du système optique.

De telles caractéristiques étaient jusqu'à présent très délicates à obtenir. Grâce à elles, il va être possible, en fonction de l'orientation des strates, d'extraire ou d'injecter un flux de lumière dans la fibre. Et ceci va pouvoir être utilisé pour de nombreuses applications.

C'est d'ailleurs pourquoi l'invention concerne également la mise en oeuvre d'une telle fibre optique en particulier comme extracteur sélectif de flux à une longueur d'onde donnée ($\lambda$ s), comme injecteur de lumière, comme coupleur de deux fibres optiques chacune du type précité, comme capteur ,et comme polarisateur.

Dans l'application "coupleur", celui-ci pourra en particulier comporter un système optique cylindrique, à section elliptique, chacune des fibres étant alors de préférence située, dans la partie de sa longueur où elle comporte des variations d'indice, à l'un des foyers de ce système optique.

Dans un autre mode de réalisation d'un tel coupleur, les fibres pourront être au contact l'une de ' l'autre dans la partie de leur longueur où elles comportent des variations d'indice de réfraction. Et l'angle $\alpha_1$ d'inclinaison des strates de la première fibre sera de préférence égal à l'angle $\alpha_2$ d'inclinaison des strates de la deuxième fibre, les fibres étant orientées autour de leur axe de telle sorte que le flux sortant de la première fibre rentre dans la deuxième.

Dans l'application "capteur" (à la longueur d'onde $\lambda_s$) destiné à la mesure d'un paramètre P, ce capteur comportera avantageusement un système optique cylindrique réfléchissant, à section circulaire, entourant au moins partiellement au moins une fibre optique du type précité.

Les positions relatives du système optique et de la fibre seront fonctions du paramètre P, l'une de ces positions au moins étant de préférence telle que la fibre optique se trouvera au centre du système optique, dans la partie de sa longueur où elle comporte des variations d'indice.

L'invention sera décrite en détail en référence aux figures dans lesquelles :

La figure 1 est une représentation schématique de la fibre de l'invention.

La figure 2 est la représentation d'un extracteur selon l'invention.

La figure 3 est la représentation schématique d'un injecteur à fibre optique selon l'invention.

La figure 4 est la représentation d'un coupleur à fibre optique selon l'invention dans un premier mode de réalisation.

La figure 5 est la représentation d'un coupleur à fibre optique selon l'invention, dans un deuxième mode de réalisation.

Les figures 6A et 6B sont des schémas illustrant le fonctionnement d'une fibre selon l'invention placée au centre d'un système optique catadioptrique.

Les figures 7A et 7B sont la représentation d'un capteur à fibre optique, selon l'invention dans un premier mode de réalisation.

Les figures 8A et 8B sont une représentation d'un capteur à fibre optique selon l'invention dans un deuxième mode de réalisation.

La figure 9 est une représentation d'un capteur selon l'invention dans un troisième mode de réalisation.

La figure 10, est la représentation d'un capteur à fibre optique selon l'invention dans un quatrième mode de réalisation.

La figure 11 est la représentation d'un capteur à fibre optique selon l'invention dans un cinquième mode de réalisation.

La figure 12 est la représentation d'un polariseaur à fibre optique selon l'invention.

L'invention concerne une fibre optique 1. Traditionnellement, celle-ci a une gaine 2, un coeur 3, un axe 4. Selon l'invention, cette fibre optique présente des variations d'indice de réfraction disposées en strates 5 planes, parallèles et périodiques, de période I dans la direction de l'axe. Les strates planes 5 sont inclinées d'un angle $\alpha$ par rapport à l'axe 4 de la fibre et seront de préférence définitivement gravées ou imprimées dans le coeur et/ou dans la gaine. (Mais il faut rappeler que des strates temporaires sont envisageables).

Deux dispositions peuvent être créées.

Dans la première la fibre optique 1 comporte un réseau de Bragg 6 dont la normale aux strates est inclinée par rapport à son axe 4 d'un angle différent de 90°.

Dans la deuxième situation la fibre optique 1 comporte un réseau de diffraction de Bragg 6 dont les strates sont parallèles à son axe 4 ; c'est-à-dire que la normale aux strates est perpendiculaire à l'axe de la fibre.

Dans la première situation, ce réseau de Bragg 6 engendre une déviation d'un flux lumineux incident sous une direction inclinée par rapport à la direction normale ou plan des strates 5.

Ainsi, en exploitant cette propriété difficile à mettre en, oeuvre dans des fibres optiques, il va être en l'espèce possible d'extraire,ou d'injecter un flux lumineux dans une fibre et d'exploiter cette propriété pour la réalisation d'un grand nombre de dispositifs ou de composants.

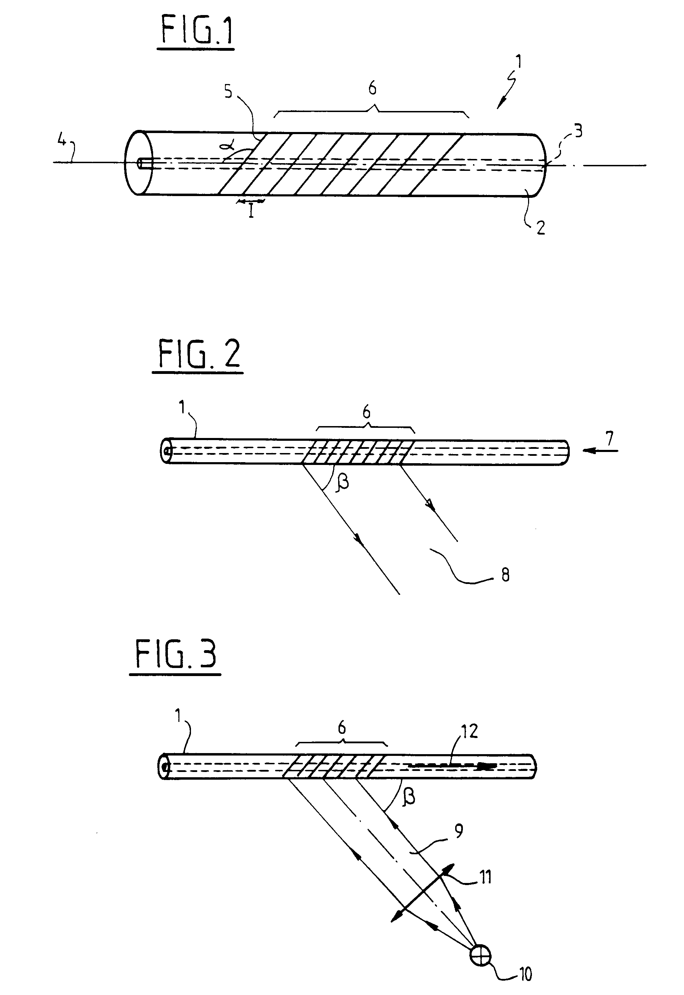

Sur la figure 1, un flux lumineux se propageant dans la fibre 1 est partiellement dévié d'un angle $\beta$ par réflexion sur le réseau de Bragg 6. Lorsque cet angle $\beta$ est suffisamment important, la partie du flux lumineux, initialement guidée par la fibre 1, déviée selon cet angle est extraite de la fibre 1.

Réciproquement, pour les mêmes caractéristiques du réseau de Bragg 6 un faisceau lumineux se présentant sous un angle d'incidence β au niveau de ce réseau est couplé dans la fibre optique 1.

Le réseau de Bragg 6 est formé en soumettant une fibre optique de préférence en silice dopée au germanium à un flux lumineux à une longueur d'onde située dans l'ultra violet dont l'intensité varie dans la direction de l'axe 4 de la fibre, de manière analogue aux variations de l'indice de réfraction recherché. Ce flux lumineux est facilement obtenu en formant, sur la fibre 1 des franges d'interférences inclinées par rapport à son axe 4 et de période I. A cet effet on produit sur la fibre 1 l'interférence de deux faisceaux lumineux, à la longueur d'onde $\lambda_p$, inclinés l'un par rapport à l'autre d'un angle $2\Theta$. Il est connu que on obtient ainsi des franges d'interférences rectilignes d'interfrange

$$I = \frac{\lambda_p}{2n\sin\Theta}$$

Lorsque le réseau de Bragg 6 a été formé dans la fibre 1 un flux lumineux 7 couplé dans la fibre optique 1 est partiellement diffracté par le réseau de Bragg 6 et produit un faisceau lumineux 8 incliné d'un angle β par rapport à l'axe de la fibre 1 (figure 2).

Tel que représenté sur la figure 3, de manière inverse un faisceau lumineux 9, parallèle, produit à partir d'une source 10, par exemple par une lentille de collimation 11, incidente sur le réseau de Bragg 6 sous l'angle β produira un flux lumineux 12 couplé dans la fibre 1.

Dans un cas comme dans l'autre, à l'extraction ou à l'injection, l'angle d'incidence β est relié à la période I du réseau de Bragg 6 et à la longueur d'onde $\lambda_s$ du flux lumineux signal. La bande passante chromatique du dispositif $\Delta\lambda_s$ pour un angle β donné est inversement proportionnel au nombre de strates du réseau de Bragg. Ainsi les caractéristiques du réseau de Bragg peuvent déterminer, pour un angle β donné $\lambda_s$ et $\Delta\lambda_s$.

En combinant extraction et injection il est possible de réaliser un coupleur à fibre optique à la longueur d'onde $\lambda_s$, comportant deux fibres optiques 20, 21 ayant chacune une gaine respectivement 22, 23, un coeur respectivement 24, 25 un axe, respectivement 26, 27.

Un système optique 28 à surface intérieure réfléchissante, normalement concave, propre à entourer les fibres, conjugue ces fibres 20 et 21 au moins sur une partie de leur longueur dans laquelle elles présentent les réseaux de Bragg respectivement 29, 30.

Ainsi un flux lumineux 31 est guidé dans la fibre 20 et est au moins partiellement extrait par le réseau de Bragg 29, de la fibre 20 sous l'ange $\beta_1$. Le faisceau extrait, repris par le système optique 28 est incident sur la fibre 21, conjuguée de la fibre 20 sous l'angle $\beta_2$. L'orientation du réseau de Bragg 30 de la fibre 21 est telle que ce faisceau réfléchi produit le flux 32 guidé dans la fibre 21.

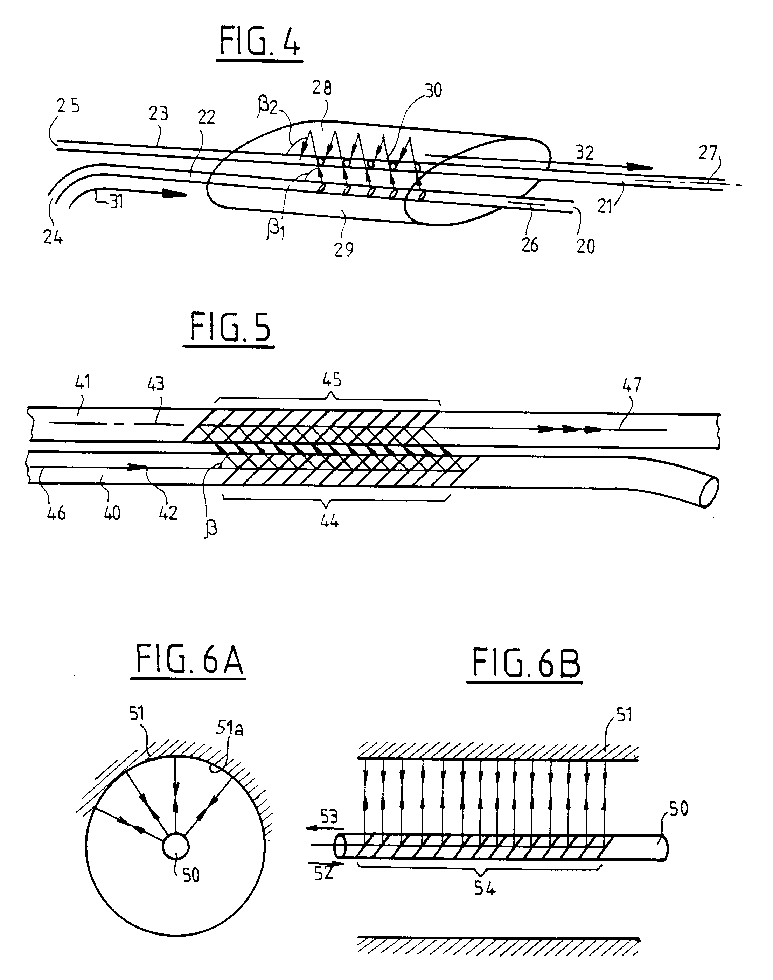

Dans le mode de réalisation représenté à la figure 4 le système optique 28 est un miroir cylindrique à section ellipsoïdale, les fibres 20 et 21 ayant leurs axes 26, 27 confondus avec les axes foyers de ce réflecteur.

Sur la figure 5 un autre mode de réalisation d'un coupleur à deux fibres respectivement 40 et 41. Les axes de ces fibres 42, 43 sont parallèles dans la partie de leur longueur où elles comportent chacune un faisceau de Bragg respectivement 44, 45. Le flux 46 incident, guidé dans la fibre 40 est partiellement extrait sous l'angle β par le réseau de Bragg 44. Compte tenu du parallélisme des axes 42, 43 ce flux extrait de la fibre 40 est incident sur la fibre 41 sous l'angle β. Les strates du réseau de Bragg 45 de la fibre 41 sont parallèles à celles du réseau 44 de la fibre 40. Ainsi ce flux lumineux, incident sur la fibre 41 est guidé dans celle-ci produisant le flux 47.

Le rendement de ce coupleur, c'est-à-dire le rapport entre le flux incident 46, initialement couplé à la fibre 40 et le flux sortant 47 couplé, en sortie, à la fibre 41 est amélioré lorsque les coeurs des fibres 40 et 41 sont rapprochés l'un de l'autre au niveau des réseaux de Bragg 44 et 45. Cela peut être obtenu en abrasant partiellement les gaines de chacune des fibres 40 et 41 dans la zone des réseaux de Bragg 44, 45.

Des effets intéressants sont produits lorsqu'une fibre conforme à l'invention, 50, est placée au centre d'un système optique catadioptrique 51 toujours à surface intérieure 51a réfléchissante, et en l'espèce de forme cylindrique à section circulaire. Dans ce cas un faisceau incident 52, partiellement extrait par le réseau de Bragg 54, est réfléchi sur lui-même par le système catadioptrique 51, ses rayons extraits réfléchis convergeant alors vers la fibre pour produire un flux sortant 53 couplé à la fibre dont la direction de propagation est opposée à celle du flux incident 52. Ce dispositif peut être mis en oeuvre pour la réalisation de nombreux capteurs. Dans ce type de dispositifs, par exemple ceux représentés sur les figures 6, 7, et 8, l'élément réfléchissant est avantageusement à base de microbilles.

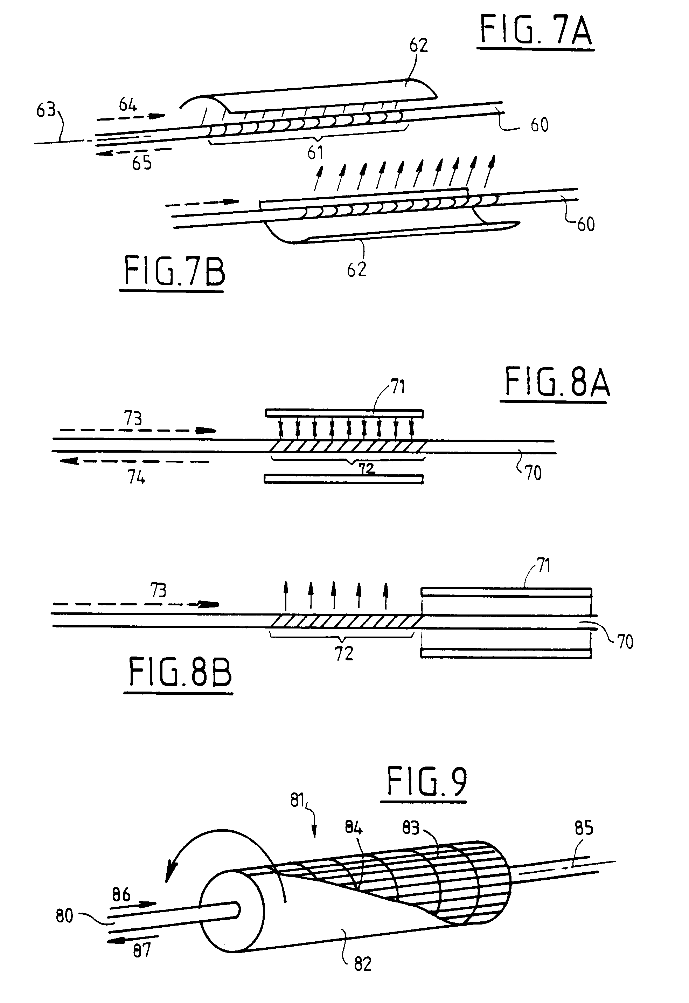

Le premier type de capteur est représenté sur les figures 7A, 7B. La fibre optique 60 comportant un réseau de Bragg 61 est placée au centre d'un réflecteur cylindrique à section en arc de cercle 62. L'orientation azimutale de ce réflecteur autour de l'axe 63 de la fibre 60 est commandée par un paramètre extérieur quelconque P entre deux positions respectivement représentées sur la figure 7A et sur la figure 7B.

Dans la postion représentée sur la figure 7A le flux lumineux 64 incident est partiellement extrait par le réseau de Bragg 61, réfléchi par le réflecteur 62 et couplé en retour par le réseau de Bragg 61 il donne naissance au flux rétroguidé 65.

Au contraire dans la position représentée sur la figure 7B, le réflecteur 62 est dans une position telle qu'il ne réfléchit pas le flux extrait par le réseau de Bragg 61.

La mesure à distance du flux rétro réfléchi 65 permet donc de connaître la position du réflecteur 62 autour de l'axe 63 et par là d'accéder au paramètre P qui commande cette position.

Un autre capteur est représenté sur les figures 8A et 8B. Dans ce cas la fibre 70 a son axe confondu avec un miroir cylindrique à section circulaire 71. Ce miroir cylindrique est susceptible d'être déplacé par l'effet d'un paramètre extérieur P parallèlement à son axe. Lorsque, tel que représenté sur la figure 8A le réflecteur 71 est au niveau du réseau de Bragg 72 le flux incident 73, partiellement extrait par le réseau 72 est réfléchi par le réflecteur 71 et donne naissance au flux rétroguidé 74.

Au contraire tel que représenté sur la figure 8B, le réflecteur 71 est longitudinalement décalé par rapport au réseau de Bragg 72. Le flux incident 73 ne produit alors aucun flux rétroguidé tel que le flux 74.

La mesure, à distance du flux réfléchi 74 permet de connaître la position du réflecteur 71 par rapport au réseau de Bragg 72 et par là d'accéder au paramètre P qui commande cette position. Il est ainsi possible de connaître également des positions intermédiaires du réflecteur 71 et donc de faire une mesure analogique d'un paramètre P qui commande cette position.

Sur la figure 9 est représenté un capteur de rotation. Une fibre 80 comportant un réseau de Bragg est placée sur l'axe d'un manchon cylindrique 81. Ce manchon comporte une zone intérieurement réfléchissante 82 et une zone non réfléchissante 83 séparées par une hélice 84. Selon l'orientation du manchon 81 autour de son axe 85 une partie plus ou moins importante du réseau de Bragg de la fibre 80 voit la partie réfléchissante 82 du manchon 81. Ainsi le flux 87 réfléchi par le manchon 81 est couplé en retour à la fibre 80 à partir du flux incident 86 et dépend de l'orientation du manchon 81 autour de son axe. La mesure, à distance, de ce flux réfléchi 87 permet d'accéder à la position angulaire du manchon 81 et par là à la valeur du paramètre P qui la commande.

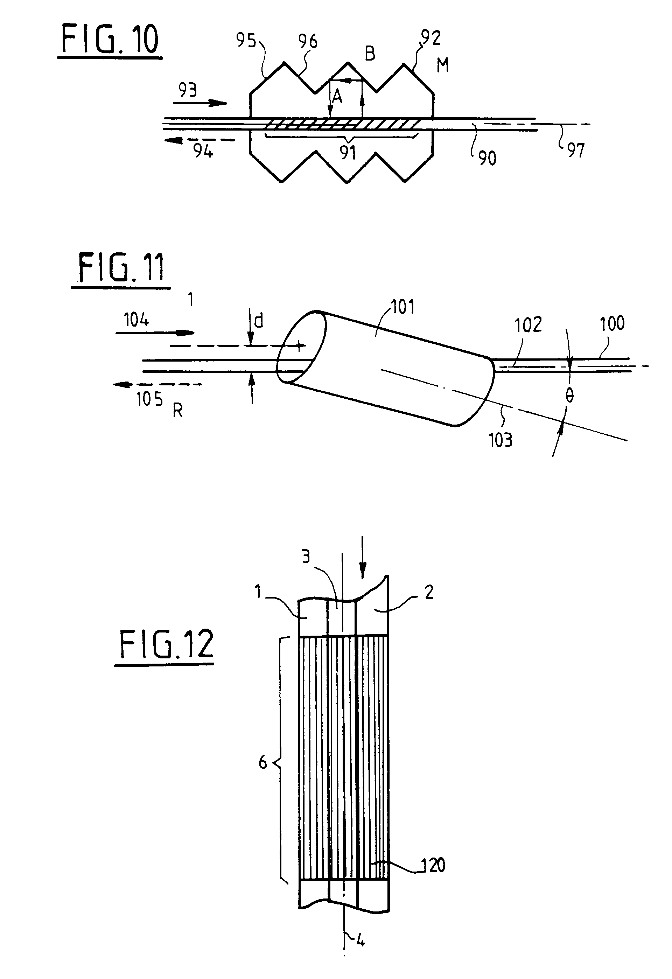

La figure 10 représente un capteur réalisé en plaçant une fibre 90 comportant un réseau de Bragg 91 sur l'axe d'un manchon 92. Ce manchon, cylindrique est un système catadioptrique composé d'un miroir de révolution, de même axe que la fibre. Il est engendré par la rotation d'une ligne brisée à angles droits, dont les éléments sont inclinés à 45° par rapport à l'axe.

Il peut être constitué d'un bloc de matériau transparent, percé d'un canal cylindrique recevant la fibre; dans ce dernier cas un liquide d'indice est avantageusement mis en oeuvre pour assurer la continuité d'indice entre la fibre et le bloc de matériau. La réflexion sur ses faces est obtenue par l'effet d'un dépot métallique ou diélectrique ou par réflection totale.

Il peut également être creux et revêtu de couches réfléchissante métallique ou diélectrique.

Le faisceau 93 incident, couplé dans la fibre 90 est partiellement extrait par le réseau de Bragg 91 puis à nouveau couplé dans cette fibre après réflexion sur le manchon 92. Il est ainsi possible, en mesurant à distance le flux réfléchi 94 d'accéder soit à la position du manchon 92 par rapport au réseau de Bragg 91 soit à sa position angulaire autour de son axe lorsque sa surface est partiellement réfléchie. La mesure du flux réfléchi 94 permet donc d'accéder à un paramètre P qui commande l'une ou l'autre de ces positions.

Le capteur représenté sur la figure 11 est un capteur tout ou rien. Il est composé d'une fibre 100 entourée d'un cylindre réflecteur 101. Le paramètre P que l'on cherche à mesurer commande les positions relatives de l'axe 102 de la fibre optique 100 par rapport à l'axe 103 du cylindre 101. Dans l'une des positions, dites positions actives, ces axes respectivement 102 et 103 sont confondus. Au contraire en position non active ces axes sont différents.

Le flux incident 104 couplé à la fibre optique 100 est réfléchi par le cylindre 101 lorsqu'il est en position active et engendre le flux réfléchi 105 également couplé à la fibre 100. Au contraire en position non active le flux 104 ne produit en retour, dans la fibre, qu'un flux réfléchi 105 trés faible par rapport au flux incident 104.

La mesure à distance du flux réfléchi 105 permet donc d'accéder à la position du cylindre réfléchissant 101 et par là à un paramètre P qui la commande.

Un intérêt important des fibres à réseau de Bragg selon l'invention est que les réseaux de Bragg 6 peuvent être déterminés de sorte à ne prélever qu'une partie du flux incident couplé à la fibre optique 1. Il est ainsi possible de placer sur une même fibre un nombre important de capteurs reconnus les uns par rapport aux autres soit par la longueur d'onde $\lambda_s$ sur laquelle ils agissent soit par leur distance par rapport à la centrale de mesure.

Dans la deuxième situation représentée à la figure 12, les strates 120 sont parallèles à l'axe 4 de la fibre 1. Ces strates ont un effet polarisant sur l'onde signal guidée par la fibre.

On notera enfin qu'en variante le système optique à surface intérieure réfléchissante pourrait éventuellement être placé directement au contact de la gaine des fibres, par exemple via une métallisation de surface des fibres.

**Revendications**

1. - Dispositif optique comprenant au moins une fibre optique (1) ayant une gaine (2), un coeur (3), un axe (4), une longueur dans la direction de son axe, cette fibre comportant au moins sur une partie de sa longueur des variations d'indice de réfraction disposées en strates (5) sensiblement parallèles entre elles et périodiques, caractérisée en ce que la normale aux strates (5) fait un angle non nul avec l'axe (4) de la fibre (1).

**2.** - Dispositif selon la revendication 1 caractérisé en ce qu'il comprend un système optique (28 ; 51, 62 ; 81) avec une surface intérieure réfléchissante propre à entourer au moins partiellement ladite fibre en particulier là où elle comporte ses dites strates, pour être en mesure de réfléchir une partie au moins d'un flux lumineux circulant dans cette fibre et qui en a été extrait par l'intermédiaire desdites strates.

**3.** - Dispositif selon la revendication 2 caractérisée en ce que ledit système optique réfléchissant est cylindrique, ladite fibre (20, 21 ; 50, 60) étant, dans la partie de sa longueur où elle comporte des variations d'indice, située à un foyer du système optique.

**4.** - Dispositif selon la revendication 2 ou la revendication 3 caractérisé en ce qu'il comprend deux fibres optiques (20, 21) et en ce que ledit système optique réfléchissant est à section ellipsoïdale, chacune desdites fibres étant, dans la partie de sa longueur où elle comporte des variations d'indice, située à l'un des foyers du système optique.

**5.** - Dispositif selon l'une des revendications précédentes caractérisé en ce que lesdites strates (5) sont permanentes.

**6.** - Dispositif selon la revendication 4 ou la revendication 5 caractérisé en ce que l'angle d'inclinaison des strates de la première fibre (40) est sensiblement égal à l'angle d'inclinaison de celles de la deuxième fibre (41), lesdites fibres étant orientées autour de leurs axes respectifs de telle sorte que le flux sortant de la première fibre entre dans la deuxième.

**7.** - Dispositif selon l'une des revendications 4 à 6 caractérisé en ce que les deux dites fibres sont au contact l'une de l'autre dans la partie de leur longueur où elles comportent des variations d'indice, les gaines de chacune des fibres (40, 41) étant partiellement abrasées dans leurs zones de contact, de manière à rapprocher leurs coeurs.

**8.** - Dispositif selon l'une des revendications 2, 3 ou 5, caractérisé en ce qu'il est destiné à la mesure d'un paramètre (P) et en ce que ledit système optique réfléchissant (51, 62) est à section sensiblement circulaire ou en arc de cercle, les positions relatives de ce système optique et de la fibre (50, 60) étant fonction dudit paramètre (P), l'une de ces positions au moins correspondant à celle où ladite fibre optique se trouve, dans la partie de sa longueur où elle comporte lesdites variations d'indice, au centre du système optique (51,62).

**9.** - Dispositif selon la revendication 8 caractérisé en ce que le système optique est un manchon (71, 81, 92) placé autour de la fibre optique et se déplaçant longitudinalement en fonction dudit paramètre (P) à mesurer.

**10.** - Dispositif selon la revendication 9 caractérisé en ce que le manchon (81) est cylindrique à section circulaire,lesdites strates étant inclinées par rapport à l'axe (14) de la fibre.

**11.** - Dispositif selon la revendication 9 caractérisé en ce que le manchon (92) est à section circulaire avec une génératrice en forme de ligne brisée , formant une succession de catadioptres.

**12.** - Dispositif selon l'une des revendications 2, 3, 5 ou 8 caractérisé en ce que ledit système optique est un miroir cylindrique ayant une section en arc de cercle (62) , mobile en rotation autour de l'axe de la fibre (60),

**13.** - Dispositif selon l'une des revendications 2, 3, 5 ou 8 caractérisé en ce que le système optique est un miroir (81) cylindrique partiel localisé entre une génératrice et une hélice (84).

**14.** - Dispositif formant polariseur à une longueur d'onde déterminée ( λ s) comprenant une fibre optique (1) ayant une gaine (2), un coeur (3), un axe (4), une longueur dans la direction de cet axe, ladite fibre présentant au moins sur une partie de sa longueur des variations d'indices de réfraction disposées en strates (120) sensiblement parallèles entre elles et périodiques, la normale auxdites strates (120) faisant un angle non nul avec l'axe (4) de la fibre.

**15.** - Dispositif formant polarisateur selon la revendication 14 caractérisé en ce que les strates (120) de la fibre optique (1) sont permanentes et/ou parallèles à l'axe (4) de cette fibre.

FIG.1

FIG. 2

FIG. 3

FIG. 4

FIG.5

FIG. 6A

FIG. 6B

8

FIG. 7A

FIG.7B

FIG.8A

FIG.8B

FIG.9

FIG. 10

FIG. 11

FIG.12